# EUROPÄISCHE PATENTSCHRIFT

(11) **EP 3 352 534 B1**
(45) Veröffentlichungstag und Bekanntmachung des Hinweises auf die Patenterteilung: **25.08.2021**
(21) Anmeldenummer: 18151582.6
(22) Anmeldetag: 15.01.2018
(51) Int. Cl.: H05B 47/10

(54) **BELEUCHTUNGSANORDNUNG, BELEUCHTUNGSSYSTEM SOWIE VERFAHREN ZUR STEUERUNG EINER BELEUCHTUNGSANORDNUNG**
LIGHTING ASSEMBLY, LIGHTING SYSTEM AND METHOD FOR CONTROLLING A LIGHTING ASSEMBLY
DISPOSITIF D'ÉCLAIRAGE, SYSTÈME D'ÉCLAIRAGE, AINSI QU'UN PROCÉDÉ DE COMMANDE D'UN DISPOSITIF D'ÉCLAIRAGE

(30) Priorität: 23.01.2017 DE 102017201006
(43) Veröffentlichungstag der Anmeldung: 25.07.2018
(73) Patentinhaber: Zumtobel Lighting GmbH, 6850 Dornbirn (AT); Technische Universität Berlin, 10623 Berlin (DE)
(72) Erfinder: Knoop, Martine, 10587 Berlin (DE); Weber, Nils, 10587 Berlin (DE); Johler, Günther, 6850 Dornbirn (AT); Petschulat, Manfred, 6922 Wolfurt (AT); Knoop, Thomas, 14167 Berlin (DE)
(74) Vertreter: Kiwit, Benedikt

(56) Entgegenhaltungen:
- WO-A1-2015/175529
- US-A1- 2014 052 220
- US-A1- 2015 022 093

## Beschreibung

Die vorliegende Erfindung betrifft ein Beleuchtungssystem aufweisend eine Beleuchtungsanordnung mit einer Leuchte und einer Leuchtensteuerung zur Steuerung von Leuchtenparametern zur definierten Lichtabgabe der Leuchte sowie eine externe Sensoranordnung. Darüber hinaus betrifft die vorliegende Erfindung ferner ein Verfahren zur Steuerung von Leuchtenparametern zur definierten Lichtabgabe einer Leuchte einer Beleuchtungsanordnung der vorbeschriebenen Art.

Aus dem Stand der Technik ist es grundsätzlich bekannt, Beleuchtungsanordnungen bereitzustellen, welche auf Basis lokaler Tageslichtinformationen, welche in der Regel über Leuchten-gebundene bzw. Leuchten-nahe Sensorik erfasst werden, zugehörige Leuchten entsprechend steuern. Die dafür erforderlichen Tageslichtsensoren sind bei bisher bekannten Lösungen in der anzusteuernden Leuchtenstruktur selbst integriert und befinden sich daher in oder in unmittelbarer Nähe der anzusteuernden Leuchten.

US 2015/0022093 A1 zeigt eine Methode zur Steuerung der Belichtung einer Person 8 während eines bestimmten Zeitraumes. Zur Steuerung der Leuchten 1 ist eine Steuereinheit 4 vorgesehen. Ein erster Sensor 2 wird von einer Person 8 getragen und sammelt personenspezifische Belichtungsdaten einschließlich Beleuchtungsintensitätsdaten und Kelvintemperaturdaten. Zweite Sensoren 2 sind in einem Gebäude 9 angeordnet, um Daten über das dort emittierte Licht zu sammeln. Die von den beiden Sensoren gesammelten Lichtdaten werden an die Steuereinheit 4 übertragen. Die gesammelten Lichtdaten werden zusammen mit den gewünschten Daten einschließlich der gewünschten Lichtintensität und der gewünschten Kelvin-Temperatur gespeichert. Die optimale Belichtung für die Person 8 wird basierend auf den gesammelten Lichtdaten oder den gewünschten Daten bestimmt. Ein Ausgangssignal wird auf der Grundlage der optimalen Belichtung erzeugt. Die Leuchten 1 werden basierend auf dem Ausgangssignal gesteuert, um ein tägliches Gesamtlichtintensitäts- und Kelvintemperaturmuster für die Person 8 zu erzeugen.

US 2014/0052220 A1 zeigt ein Beleuchtungssystem 1 zum Einleiten einer Änderung eines Biorhythmuses oder eines Zustandes des Wohlbefindens eines Säugetiers. Eine Recheneinheit 2 empfängt Zustandsinformationen bezüglich des Biorhythmuses oder des Wohlbefindens des Säugetiers und Betriebsinformationen von einem Lichtsensor 5 und gibt auf der Grundlage eines Vergleichs der empfangenen Zustandsinformationen und Betriebsinformationen ein Steuersignal an eine

Lichtsteuereinheit 10 aus, die wiederum eine steuerbare Lichtquelle 12 einstellt.

Durch die Variation des emittierten Lichtes wird eine gewünschte Veränderung des Biorhythmuses oder des Wohlbefindens des Säugetiers eingeleitet. WO2015/175529 offenbart eine Sensordaten-basierte Leuchtensteuerung mit Internetanbindung.

Es ist somit eine Aufgabe der vorliegenden Erfindung, ein Beleuchtungssystem und ein Verfahren zur Steuerung einer Beleuchtungsanordnung bereitzustellen, welche bei vereinfachter Leuchtenstruktur eine effektive und effiziente lokale Leuchtensteuerung ermöglichen.

Diese Aufgabe wird durch den Gegenstand der unabhängigen Ansprüche gelöst. Die abhängigen Ansprüche bilden den zentralen Gedanken der Erfindung in besonders vorteilhafter Weise weiter.

Gemäß einem ersten Aspekt betrifft die vorliegende Erfindung ein Beleuchtungssystem mit einer erfindungsgemäßen Beleuchtungsanordnung. Die Beleuchtungsanordnung weist wenigstens eine Leuchte sowie eine Leuchtensteuerung zur Steuerung von Leuchtenparametern zur definierten Lichtabgabe der Leuchte auf. Die Leuchtensteuerung weist ferner eine Internetanbindung zum Erhalt extern bereitgestellter Lichtinformationen auf. Unter einer Internetanbindung wird im Rahmen der Erfindung im weitesten Sinne jede Form von internetfähigen Modulen verstanden, wie beispielsweise ein WLAN-Modul, ein internetfähiger Server, sonstige elektronische Strukturen oder Bausteine zur Ermöglichung von internetbasiertem Datenaustausch - bevorzugt wenigstens teilweise drahtlos via Funk und dergleichen - sowie jegliche Kombinationen derselben. Die Leuchtensteuerung ist dabei derart eingerichtet, um auf Basis der so erhaltenen Lichtinformationen - also der extern bereitgestellten Lichtinformationen - in Abhängigkeit lokaler Leuchteninformationen die Lichtabgabe der Leuchte zu steuern; mithin also insbesondere die Leuchtenparameter der Leuchte entsprechend einzustellen.

Insbesondere durch die internetbasierte Erfassung extern bereitgestellter Lichtinformationen wird es ermöglicht, dezentrale Lichtinformationen, wie Tageslichtinformationen, zur Bestimmung lokaler Lichtverhältnisse heranzuziehen und unter Einbeziehung aktueller lokaler Leuchteninformationen für die Steuerung der Lichtabgabe der Leuchte zu nutzen bzw. einzubeziehen. Auf diese Weise wird nicht nur die Leuchtenstruktur selbst vereinfacht, indem die Datenerfassung von der Leuchte selbst entkoppelt wird. Neben der Entkopplung der Erfassung bspw. tageslichtbasierter Daten von der einzelnen Leuchte bzw. Leuchtenstruktur wird es ferner ermöglicht, die lokale Leuchtensteuerung auch unter Einbeziehung bereits vorhandener, extern erfasster dezentraler Lichtinformationen zu steuern.

Die lokalen Leuchteninformationen können dabei wenigstens eine Information aus der Gruppe bestehend aus geographischer Leuchtenposition, lokalen Lichtinformationen wie lokaler Lichtstärke, Lichtintensität, Farbtemperatur, (Tages-)Lichtspektralverteilung und Lichtdosis, Anwesenheitsinformationen beispielsweise von Personen in der Umgebung der Leuchte, und Betriebszustandsinformationen der Leuchte oder eines Eingabegeräts der Leuchte aufweisen. Auch jegliche Kombinationen der vorgenannten Informationen sind denkbar. Die geographische Leuchtenposition kann dabei einerseits eine Position der Leuchte in einem Gebäude und/oder die globale geographische Leuchtenposition umfassen, um beispielsweise diese in Relation zu den extern erfassten Lichtinformationen zu setzen und beispielsweise eine Vorhersage für lokale Lichtverhältnisse auf Basis der dezentralen Lichtinformationen bereitzustellen bzw. zu berechnen. Die lokalen Lichtinformationen können neben der vorbezeichneten Lichtdosis, welche das Ergebnis von Lichtniveau und Lichtfarbe mal Zeit ist, auch andere definierte Zielwerte gemessen über der Zeit umfassen. Allerdings auch andere Größen wie beispielsweise die Lichtstärke, Lichtintensität und Farbtemperatur im Umkreis der Leuchte. Unter den vorbezeichneten Anwesenheitsinformationen kann beispielsweise die Anwesenheit von Personen in einem definierten Bereich bezüglich der Leuchte verstanden werden. Diese Anwesenheitsinformationen können auch zusätzlich zeitlich gekoppelt sein, so dass bei Erfassung von Personen eine definierte Leuchtensteuerung über eine Zeit durchgeführt werden kann. Im Sinne einer Schwarmintelligenz kann die Anwesenheitsinformation auch an verbundene Leuchten übermittelt werden, wie im Weiteren noch beschrieben wird. Unter den vorbezeichneten Betriebszustandsinformationen der Leuchte oder eines Eingabegerätes der Leuchte kann beispielsweise eine AN- bzw. AUS-Position eines Lichtschalters, der Betriebszustand (AN/AUS) der Leuchte an sich oder auch Informationen einer Sensor-Anordnung zur Bestimmung von Defekten der Leuchte und dergleichen verstanden werden. Auch kann eine zeitliche oder eine sonstige Betriebs-Steuerung der Leuchte bzw. Beleuchtungsanordnung die Basis der vorbezeichneten Betriebszustandsinformationen bilden. So ist es beispielsweise denkbar, einen Energieverbrauchswert pro Zeiteinheit als lokale Leuchteninformation festzulegen. Die erhaltenen Lichtinformationen sind mittels verteilt vorgesehener (externer) Sensoren, im Weiteren auch weitere Sensoren genannt, erfasste Lichtinformationen, insbesondere Tageslichtinformationen. So kann die Leuchtensteuerung bevorzugt tageslichtoptimiert angesteuert werden. Die erhaltenen Lichtinformationen umfassen ferner weitere Daten, wie insbesondere Wetterdaten, z.B. Wettervorhersagedaten, Helligkeitsdaten oder Helligkeitsvorhersagedaten, definierte und bevorzugt standardisierte Himmelsmodelle, sonstige zeitliche Informationen, wie beispielsweise Jahreszeitinformationen, oder beliebige Kombinationen derselben. Die weiteren Daten werden dabei von externen Quellen (Wetterdienste; Wetterstationen, etc.) bereitgestellt. Diese können ferner bevorzugt ebenfalls internetbasiert bereitgestellt werden. Mittels der Einbeziehung weiterer Daten können bereits vorhandenen Informationen gezielt für die Leuchtensteuerung genutzt werden.

Die Beleuchtungsanordnung ist derart eingerichtet, um auf Basis der erhaltenen Lichtinformationen die Tageslichtsituation und den Himmelszustand in der Umgebung der Beleuchtungsanordnung oder deren Leuchte(n) zu antizipieren. Dabei kann es sich bevorzugt um die Lichtstärke, Lichtintensität, Farbtemperatur oder Lichtspektralverteilung des Tageslichts oder Kombinationen derselben handeln. Die so gewonnenen antizipierten Wetter- bzw. Lichtinformationen werden sodann in Abhängigkeit der lokalen Leuchteninformationen genutzt, um die Lichtabgabe der Leuchte zu steuern. So können beispielsweise definierte/standardisierte Himmelsmodelle in Verbindung mit entsprechend erhaltenen Wetterdaten herangezogen werden, um eine vereinfachte aber ausreichend genaue Messung einer Tageslichtspektralverteilung zu ermöglichen, auf Basis derer in Abhängigkeit der lokalen Leuchteninformationen die Leuchte angesteuert werden kann.

Die erhaltenen Lichtinformationen können aktuelle, zukünftige oder auch aktuelle und zukünftige lokale Lichtinformationen umfassen. Dies können bspw. lokale Wetter- und/oder Helligkeitsvorhersagedaten sein. Auf Basis bzw. unter Einbeziehung dieser kann die Lichtabgabe der Leuchte in Abhängigkeit der lokalen Leuchteninformationen gesteuert werden. Die Beleuchtungsanordnung ist dabei bevorzugt derart eingerichtet, dass wenigstens die zukünftigen lokalen Lichtinformationen auf Basis der extern bereitgestellten Lichtinformationen erhalten bzw. gewonnen werden. Die Einbeziehung derartiger antizipierter Informationen ermöglicht eine zielgerichtete Ansteuerung der Beleuchtungsanordnung. So ist es beispielsweise denkbar, eine Leuchtensteuerung auf Basis von Daten von Wetterstationen oder weiter entfernten Sensoren und Tageslichtmeßköpfen durchzuführen. Diese Daten werden genutzt, um eine Tageslichtsituation (bspw. Lichtstärke bzw. -intensität, Farbe bzw. Farbtemperatur, Lichtspektralverteilung, etc.) und einen Himmelszustand (bspw. Bewölkungssituation) bzgl. des Ortes der Beleuchtungsanordnung zu antizipieren (also ausgehend von extern und ggf. verteilt gewonnenen Informationen eine Beleuchtungsvorhersage für einen definierten Ort zu bestimmen) und die Lichtsteuerung darauf basierend so zu beeinflussen, dass eine gewünschte Lichtabgabe der Leuchte umgesetzt werden kann; dies bei Bedarf auch über eine definierte Zeit gesehen. Beispielsweise kann die antizipierende Lichtsteuerung zur Verbesserung der Gesundheit durch Berücksichtigung nicht visueller Lichtwirkung eingesetzt werden, indem eine für die Gesundheit notwendige Lichtdosis (bspw. über Steuerung entsprechender Intensität und Spektrum über der Zeit) zur Verfügung gestellt wird. Aufgrund der antizipierten Steuerung ist es möglich, auch über einen langen Zeitraum eine harmonische und gleichmäßige Lichtabgabe zu erzielen, während bekannte Systeme allenfalls auf die aktuelle lokale Lichtsituation reagieren können, was unter Umständen zu starken Lichtabgabeschwankungen geführt hat.

Auch kann die antizipierende Lichtsteuerung zur Optimierung der Energieverbrauchswerte in Gebäuden eingesetzt werden, indem sie bspw. einen solaren bzw. thermischer Eintrag in Gebäuden auf Basis antizipierter Lichtverhältnisse vorherbestimmt und diesen in Abhängigkeit vorhandener Energiereserven bzw. eine geplante Leuchtensteuerung zu setzen. Somit kann eine energieeffiziente Leuchtensteuerung erzielt werden.

Die Beleuchtungsanordnung und insbesondere die Leuchte selbst können ferner Sensoren zur Erfassung der lokalen Leuchteninformationen in der Umgebung der Leuchte aufweisen. Die Sensoren können hierzu vorzugsweise wenigstens einen Sensor aus der Gruppe bestehend aus Lichtsensoren zur Erfassung von lokalen Lichtinformationen in der Umgebung der Leuchte, Anwesenheitssensoren zur Erfassung von Anwesenheitsinformationen bspw. von Personen, und Betriebszustandssensoren zum Erfassen eines Betriebszustandes der Leuchte aufweisen. Mittels der vorbezeichneten Sensoren bzw. Sensorik kann es auf einfache Weise ermöglicht werden, lokale Leuchteninformationen zu erfassen, welche unter anderem zur Steuerung der Lichtabgabe der Leuchte bzw. der Leuchtenparameter herangezogen werden können.

Die zu steuernden Leuchtenparameter weisen dabei wenigstens einen Parameter aus der Gruppe bestehen aus Lichtstärke, Lichtintensität, Farbtemperatur und Lichtspektralverteilung sowie jegliche Kombinationen derselben auf. Auch andere Leuchtenparameter sind denkbar.

Die Beleuchtungsanordnung kann eine Vielzahl an Leuchten sowie eine oder mehrere Leuchtensteuerungen aufweisen. Dabei kann eine Leuchtensteuerung derart ausgebildet sein, dass sie eine, mehrere oder alle Leuchten der Beleuchtungsanordnung ansteuern kann. Es ist grundsätzlich denkbar, dass jeder Leuchte eine eigene Leuchtensteuerung oder auch Gruppen von Leuchten eine Leuchtensteuerung zugewiesen ist. Auch kann eine einzige Leuchtensteuerung für alle Leuchten der Beleuchtungsanordnung vorgesehen sein. Die Leuchtensteuerungen sind folglich vorgesehen, um auf Basis der erhaltenen Lichtinformationen in Abhängigkeit der lokalen Leuchteninformationen der jeweiligen Leuchte(n) die Lichtabgabe der jeweiligen Leuchte(n) zu steuern. Die Leuchtensteuerung kann von wenigstens zweien der Leuchten zur Steuerung der Beleuchtungsanordnung miteinander vernetzt sein. Auf diese Weise kann, auch bei Vernetzung mehrerer oder aller Leuchten, eine definierte Schwarmintelligenz durch die Leuchtensteuerung bereitgestellt werden. So können die Leuchten definierte Informationen und insbesondere Lichtinformation an benachbarte oder zugeordnete Leuchten übermitteln und somit die gesamte Beleuchtungsanordnung insgesamt vereinfachen und intelligent betreiben/steuern.

Die Sensoranordnung wiederum weist weitere Sensoren zur Erfassung von Lichtinformationen in der Umgebung des jeweiligen Sensors auf. Die Sensoranordnung weist eine weitere Internetanbindung auf, um die (externen) Lichtinformationen für die Beleuchtungsanordnung bereitzustellen. Der Begriff Internetanbindung ist hier, wie auch zuvor bereits beschrieben, als jegliche Form von internetfähigen Komponenten oder Strukturen etc. zu verstehen. Während "bereitgestellte Lichtinformationen" jegliche der Leuchtensteuerung bereitgestellten Lichtinformationen zur Steuerung der Leuchte umfassen, handelt es sich bei den "erfassten Lichtinformationen" um bspw. von Sensoren erfassten Lichtinformationen, welche bevorzugt die Ausgangsbasis der "bereitgestellten Lichtinformationen" bilden. Diese können auch identisch sein, wenn die "erfassten Lichtinformationen" direkt der Leuchtensteuerung bereitgestellt werden, wo sie schließlich verarbeitet werden. Es ist jedoch auch denkbar, dass die "erfassten Lichtinformationen" extern bereits verarbeitet werden, um bspw. eine Lichtsituation zu bestimmen oder zu antizipieren, um dann verarbeitet als "bereitgestellte Lichtinformation" der Leuchtensteuerung bereitgestellt zu werden.

Die weiteren Sensoren weisen Tageslichtsensoren zur Erfassung von Tageslichtinformationen auf. Als Tageslichtinformationen kommen beispielsweise Lichtstärke, Lichtintensität, Farbtemperatur oder Lichtspektralverteilung des Tageslichts oder Kombinationen derselben in Frage. Die Tageslichtsensoren umfassen bevorzugt Tageslichtmessköpfe, welche in der Regel an unterschiedlichen Standorten weit verbreitet bereits vorhanden sind und unter anderem von Wetterdiensten genutzt werden. Zudem können die Tageslichtsensoren auch Sensoren von Leuchten, wie Außenleuchten oder Straßenleuchten umfassen. Auch eine Kombination der vorgenannten Sensoren ist denkbar. Dies ermöglicht eine einfache Erfassung tageslichtbasierter Daten zur definierten Leuchtensteuerung. Die Einsatz der vorbezeichneten Sensoren ermöglicht zudem die Nutzung bereits vorhandener bzw. einfach bereitzustellender Sensor-Infrastrukturen.

Die Sensoranordnung weist ferner eine Cloud auf. Diese kann beispielsweise in Form eines (dezentral positionierten) Servers bereitgestellt sein. Die Cloud empfängt via der weiteren Internetanbindung die erfassten Lichtinformation der weiteren Sensoren und stellt diese bereit, um letztlich von der Leuchtensteuerung der Beleuchtungsanordnung abgerufen bzw. erhalten und/oder (direkt) an diese übermittelt zu werden. Dies bevorzugt zusammen mit weiteren Daten, welche im Folgenden beschrieben werden.

Die erhaltenen oder bereitgestellten Lichtinformationen können (ferner) weitere Daten aufweisen. Dabei handelt es sich bevorzugt um Wetterdaten (insbesondere Wettervorhersagedaten) oder Helligkeitsdaten oder Helligkeitsvorhersagedaten oder definierte und bevorzugt standardisierte Himmelsmodelle oder sonstigen Informationen (insbesondere zeitliche Informationen oder Lichtinformationen (beispielsweise Jahreszeitinformationen)) oder auch jegliche Kombination derselben, welche bevorzugt von den externen Quellen, insbesondere internetbasiert, in der Cloud oder der Leuchtensteuerung bereitgestellt werden. Eine Kommunikation zwischen Sensoren und Cloud findet folglich ebenso bevorzugt internetbasiert statt, wobei die Komponenten zur internetbasierten Kommunikation alle entsprechend Übertragungsvorrichtungen auch zur drahtlosen Datenübertragung aufweisen können; beispielsweise in Form von hier allgemein als Internetanbindung bezeichneten Vorrichtungselementen.

Durch die Nutzung dezentral erfasster Lichtinformationen für lokale Leuchtensteuerungen kann der Hardwareeinsatz auf Seiten der Beleuchtungsanordnung erheblich reduziert werden. Eine cloudbasierte Datenerfassung und Bereitstellung ermöglicht hier einen sowohl einfachen Aufbau des Systems als auch eine schnelle Erfassung und Übermittlung der erforderlichen Daten, welche wiederum mittels definierter Prozesse bzw. Algorithmen in eine definierte Leuchtensteuerung umgewandelt werden; dies insbesondere unter Einbeziehung der lokalen Leuchteninformationen. Tageslichtbasierte Daten können so grundsätzlich von der einzelnen Leuchte bzw. Leuchtenstruktur entkoppelt werden. Bevorzugt werden dazu dezentrale Lichtsituationsinformationen über verteilt vorgesehene Sensoren erfasst, welche dann internetbasiert über eine Cloud bereitgestellt werden können. Diese cloudbasierten Daten werden dann an entsprechende Leuchten, welche mittels der entsprechenden Leuchtensteuerung über die vorgesehene Internetanbindung ebenso ans Internet angebunden sind, übermittelt bzw. von diesen abgerufen.

Die zusätzliche Integration lokaler Leuchteninformationen der Leuchte bzw. im Bereich der Leuchte selbst ermöglicht zudem eine neben den Tageslichtinformationen auf die lokale Leuchtenposition abgestimmte Leuchtensteuerung, was die Effektivität und Effizienz der Anordnung weiter erhöht.

Das Beleuchtungssystem kann beispielsweise derart eingerichtet sein, dass die bereitgestellten oder erhaltenen Lichtinformationen auf Basis der von der Sensoranordnung erfassten Lichtinformationen, insbesondere der Tageslichtinformationen und bevorzugt der Tageslichtspektralverteilung, sowie auf Basis der weiteren Daten, insbesondere der Himmelsmodelle, bestimmt werden. So wird es bspw. ermöglicht, eine Tageslichtspektralverteilung auf Basis externer Informationen vereinfacht zu messen und zur Leuchtensteuerung heranzuziehen.

Vergleichbar der Beleuchtungsanordnung an sich ist es auch denkbar, dass das Beleuchtungssystem als Ganzes derart eingerichtet ist, um auf Basis der bereitgestellten oder erhaltenen Lichtinformationen die Tageslichtsituation und den Himmelszustand in der Umgebung der Beleuchtungsanordnung oder deren (jeweiligen) Leuchte(n) zu antizipieren. Die zu antizipierenden Parameter können die Lichtstärke, die Lichtintensität, die Farbtemperatur oder die Lichtspektralverteilung des Tageslichts oder auch eine Kombination von diesen sein. Die so gewonnenen, antizipierten Werte können dann verwendet werden, um in Abhängigkeit der lokalen Leuchteninformationen die Lichtabgabe der Leuchte zu steuern. Dabei können die vorbezeichneten Leuchteninformationen allesamt einzeln oder in Kombination als Bezugsgrößen bzw. Berechnungsgrundlage einfließen.

Des Weiteren vergleichbar der Beleuchtungsanordnung an sich ist es auch denkbar, dass die bereitgestellten oder erhaltenen Lichtinformationen aktuelle, zukünftige oder aktuelle und zukünftige lokale Lichtinformationen, wie lokale Wetter- und/oder Helligkeitsvorhersagedaten, umfassen, unter Einbeziehung bzw. auf Basis derer die Lichtabgabe der Leuchte in Abhängigkeit der lokalen Leuchteninformationen gesteuert wird. Das Beleuchtungssystem kann dabei derart eingerichtet sein, dass wenigstens die zukünftigen lokalen Lichtinformationen auf Basis der bereitgestellten oder der erhaltenen Lichtinformationen erhalten (bspw. mittels einfacher Übermittlung) bzw. gewonnen (bspw. durch Weiterverarbeitung der Daten bzw. Anwendung eines Algorithmus) werden.

Gemäß einem weiteren Aspekt betrifft die vorliegende Erfindung ferner ein Verfahren zur Steuerung von Leuchtenparametern zur definierten Lichtabgabe einer Leuchte einer Beleuchtungsanordnung. Das Verfahren weist dabei einen ersten Schritt zum Erhalt bzw. Abruf extern bereitgestellter Lichtinformation durch eine Leuchtensteuerung zur Steuerung von Leuchtenparametern zur definierten Lichtabgabe der Leuchte mittels einer Internetanbindung der Leuchtensteuerung auf. Des Weiteren umfasst das Verfahren ferner einen zweiten Schritt zur Steuerung der Lichtabgabe der Leuchte mittels der Leuchtensteuerung auf Basis der erhaltenen Lichtinformationen in Abhängigkeit lokaler Leuchteninformationen.

Die Vorteile der Nutzung dezentral erfasster Lichtinformationen zur Steuerung der Lichtabgabe einer Leuchte unter Einbeziehung lokaler Leuchteninformationen dieser Leuchte insbesondere mittels internetbasierter bzw. cloudbasierter Datenbereitstellung und Übertragung wurden zuvor bereits erläutert und ergeben sich in gleicher Weise für das erfindungsgemäße Verfahren.

Die lokalen Leuchteninformationen weisen bevorzugt wenigstens eine Information aus der Gruppe bestehend aus geographischer Leuchtenposition, lokalen Lichtinformationen (wie lokaler Lichtstärke, Lichtintensität, Farbtemperatur, (Tages-)Lichtspektralverteilung und Lichtdosis), Anwesenheitsinformationen, Betriebszustandsinformationen der Leuchte oder eines Eingabegerätes der Leuchte oder auch jegliche Kombination derselben auf. Die lokalen Leuchteninformationen können ferner bevorzugt wenigstens teilweise mittels Sensoren der Beleuchtungsanordnung, insbesondere der Leuchte, in der Umgebung der Leuchte erfasst werden. Die Sensoren weisen hierzu ferner vorzugsweise wenigstens einen Sensor aus der Gruppe bestehend aus Lichtsensoren zur Erfassung von Lichtinformationen in der Umgebung der Leuchte, Anwesenheitssensoren zur Erfassung von Anwesenheitsinformation bspw. von Personen in der Umgebung der Leuchte, und Betriebszustandssensoren zum Erfassen eines Betriebszustandes der Leuchte auf.

Gemäß einem bevorzugten Ausführungsbeispiel können die lokalen Leuchteninformationen, insbesondere die lokalen Lichtinformationen, einen definierten Zielwert gemessen über der Zeit umfassen. Beispielsweise kann es sich hierbei um eine definierte Lichtdosis pro Zeiteinheit (bspw. pro Tag) handeln. Die Lichtdosis ergibt sich hierbei aus dem Lichtniveau und der Lichtfarbe mal Zeit und stellt eine entscheidende Größe für eine nicht-visuelle Wirkung des Lichts zur Verbesserung von z.B. Konzentration, Gesundheit und Wohlbefinden (Human Centric Lighting) dar. Solche Lichtlösungen erfordern in der Regel höhere Lichtniveaus, vorzugsweise in kühlerer Lichtfarbe. Sie verbrauchen mehr Energie als Lichtlösung, die nur die Mindestanforderungen aus der Norm erfüllen (z.B. 25 bis 50 kWh/m²Jahr statt 15 bis 25 kWh/m²Jahr in Bürogebäuden). Um solche Lösung trotzdem Energieeffizient anbieten zu können, stellt die vorliegende Erfindung eine effiziente Einbindung von externen (Tages-)Lichtinformationen bereit. Bisherige Systeme für eine tageslichtabhängige Beleuchtung am Markt berücksichtigen bisher nur das Tageslichtniveau, da eine Erfassung in Bezug auf das Spektrum (Lichtfarbe) sehr aufwändig ist. Dabei erzielen gerade unterschiedliche Spektren bei gleicher Beleuchtungsstärke am Auge eine unterschiedliche nicht-visuelle Wirkung. Mit der vorliegenden Erfindung kann somit eine integrale und vorausschauende Analyse des (Tages-)Lichts erhalten werden, wodurch ebenso berücksichtigt werden kann, dass die entscheidende Lichtdosis auch durch später am Tag verfügbares Tageslicht erreicht werden kann. Insbesondere die dezentral erfasste (Tages-)Lichtinformationen können somit zur Vorhersage lokaler (Tages-)Lichtinformationen herangezogen werden, so dass beispielsweise eine kurzzeitige Bewölkung nicht ein unnötiges Erhöhen der Leuchtenparameter nach sich zieht, wenn aufgrund der erhaltenen Vorhersageinformationen geschlossen werden kann, dass die Lichtdosis aufgrund dieses möglicherweise kurzzeitigen Ereignisses noch ohne Probleme auch später am Tag erreicht werden kann; dies bei geringerem Energieaufwand.

Alternativ oder ergänzend kann es sich bei dem definierten Zielwert gemessen über der Zeit auch um einen definierten Energieverbrauchswert pro Zeiteinheit handeln. So kann unter Einbeziehung dieses (zusätzlichen) Wertes eine Optimierung der Energieverbrauchswerte der Beleuchtungsvorrichtung bzw. des Beleuchtungssystems bspw. in Gebäuden erzielt werden. So kann bspw. der solare bzw. thermische Eintrag in Gebäuden auf Basis der erhaltenen oder bereitgestellten Lichtinformationen vorhergesagt und in die Leuchtensteuerung mit einfließen; bspw. zu einem energieeffizienten Betrieb der Beleuchtungsanordnung.

Die bereitgestellten oder erhaltenen Lichtinformationen können aktuelle, zukünftige oder aktuelle und zukünftige lokale Lichtinformationen umfassen. Die Leuchtensteuerung bezieht folglich bevorzugt aktuelle und/oder zukünftige lokale Lichtinformationen - wie lokale Wetter- und/oder Helligkeitsvorhersagedaten - ein. Auf Basis bzw. unter Einbeziehung dieser Lichtinformationen wird die Lichtabgabe der Leuchte in Abhängigkeit der lokalen Leuchteninformationen schließlich gesteuert. Wenigstens die zukünftigen lokalen Lichtinformationen können dabei auf Basis der bereitgestellten oder erhaltenen Lichtinformation erhalten bzw. gewonnen werden. So kann beispielsweise auch geschlossen werden, dass aufgrund sich abzeichnender verschlechternder Lichtverhältnisse - bspw. wegen eines aufkommenden Gewitters - die Leuchtenparameter vorgreifend angepasst (bspw. erhöht) und somit entsprechend angesteuert werden müssen, um eine erforderliche (vorbestimmte) Lichtdosis zu erhalten.

Das neue Lichtsteuerungskonzept nutzt folglich die aktuellen und/oder zukünftigen Informationen zum (Tages-)Lichtangebot (Lichtniveau und Lichtfarbe), um die Beleuchtung im Raum adaptiv und antizipierend an die Anforderungen der Nutzer anzupassen, und um energieeffiziente Lichtlösungen mit hoher Qualität anbieten zu können. Dabei kann das momentane Lichtangebot mit Wettervorhersagen verknüpft werden, um bspw. eine gewünschte tägliche Lichtdosis sicherzustellen.

Mittels der vorliegenden Erfindung kann somit beispielsweise eine Lichtsteuerung für die Beleuchtung mit nicht-visueller (Licht-)Wirkung bereitgestellt werden, die erstmals die verfügbare Lichtdosis für eine definierte Zeiteinheit (bspw. für einen Tag) anhand des momentanen Tageslichtangebots und der Wettervorhersagen vorab bestimmen kann und nur so viel künstliches Licht beisteuert, wie zur Erreichung der sinnvollen Lichtdosis notwendig ist. Dabei können Energieeinsparungen von circa 50% erzielt werden, da bevorstehende Zeiten mit hohem Tageslichtangebot und/oder kühlerer Lichtfarbe gezielt genutzt werden können, um die tägliche Lichtdosis zu erreichen. Mit einer konventionellen tageslichtabhängigen Steuerung, die nur das momentane Tageslichtangebot im Niveau berücksichtigt, kann im Schnitt nur eine Energieeinsparung von maximal 30% erreicht werden.

Insbesondere für die antizipierende Lichtsteuerung ist dabei festzulegen, wieviel und welche Art von Tageslicht wann in einem Raum bzw. in einem Leuchtenumfeld vorhanden sein wird. Hierzu werden Tageslichtinformationen an den zentralen Messorten mittels Sensorik bestimmt. Die daraus folgenden Tageslichtbeleuchtungen im Innenraum bzw. Bereich einer Leuchte der Beleuchtungsanordnung, beispielsweise auch unter Berücksichtigung unterschiedlicher Raumgeometrien, kann dann auf Basis definierter Rechenalgorithmen bestimmt werden.

Die vorbeschriebene Internetanbindung kann dabei unter Nutzung neuer Informationstechnologien, wie Power over Ethernet, WIFI und Internet of Things zur vereinfachten Bereitstellung verwandter Daten herangezogen werden. Beispielsweise ist es auch denkbar, dass mit weiteren Informationen aus dem Gebäude, wie Anwesenheit, Dimmniveaus der künstlichen Beleuchtung sowie Position des Sonnenschutzes mit Regelungsalgorithmen ein Ergänzungssignal berechnet wird, welches die künstliche Beleuchtung entsprechend in Niveau und Lichtfarbe sowie die Leuchten- und/oder Gebäudeperipherie regelt.

Die Leuchtensteuerung steuert bevorzug wenigstens einen Leuchtenparameter der Leuchte aus der Gruppe bestehend aus Lichtstärke, Lichtintensität, Farbtemperatur und Lichtspektralverteilung, wobei auch andere Leuchtenparameter denkbar sind.

Die Beleuchtungsanordnung kann eine Vielzahl von Leuchten sowie eine oder mehrere Leuchtensteuerungen aufweisen, wobei auf Basis der erhaltenen Lichtinformationen in Abhängigkeit der lokalen Leuchteninformationen der jeweiligen Leuchte(n) die Lichtabgabe der jeweiligen Leuchte(n) gesteuert wird. Hierzu können die Leuchtensteuerungen von wenigstens zweien der Leuchten zur Steuerung der Beleuchtungsanordnung miteinander vernetzt sein, um beispielsweise eine Schwarmintelligenz zu bilden.

Das Verfahren weist ferner einen Schritt zur Erfassung von Lichtinformationen in der Umgebung jeweiliger weiterer Sensoren einer Sensoranordnung auf, sowie einen weiteren Schritt zur Bereitstellung der (externen) Lichtinformationen mittels einer weiteren Internetanbindung der Sensoranordnung, welche schließlich, wie zuvor bereits beschrieben, durch die Leuchtensteuerung der Beleuchtungsanordnung erhalten bzw. abgerufen werden können. Die weiteren Sensoren sind dabei Tageslichtsensoren, welche Tageslichtinformationen, wie beispielsweise Lichtstärke, Lichtintensität, Farbtemperatur oder Lichtspektralverteilung des Tageslichts oder Kombinationen von diesen, als extern bereitzustellende Lichtinformationen erfassen. Wie zuvor bereits dargestellt, können die Tageslichtsensoren bevorzugt Tageslichtmessköpfe oder Sensoren von Leuchten, wie Außenleuchten oder Straßenleuchten, oder eine Kombination derselben umfassen. Die Lichtinformationen der weiteren Sensoren werden via der weiteren Internetanbindung in einer Cloud der Sensoranordnung empfangen und bereitgestellt. Somit können die Daten cloudbasiert zur Verfügung gestellt werden, was den Hardwareaufwand erheblich reduziert und die Steuerung deutlich vereinfacht.

Die Internetanbindungen der Leuchtensteuerung können als weiteren Bestandteil der bereitgestellten oder erhaltenen Lichtinformationen neben den Lichtinformationen, also Tageslichtinformationen, weitere Daten erhalten bzw. abrufen. Insgesamt weisen die bereitgestellten oder erhaltenen Lichtinformationen weitere Daten auf, wie insbesondere Wetterdaten (insbesondere Wettervorhersagedaten), oder Helligkeitsdaten oder Helligkeitsvorhersagedaten, oder definierte und bevorzugt standardisierte Himmelsmodelle, oder sonstige (zeitliche) Informationen (beispielsweise Jahreszeitinformationen), oder beliebige Kombinationen derselben. Die weiteren Daten sind dabei von externen Quellen, insbesondere internetbasiert bzw. via der Internetanbindungen, in der Cloud oder auch direkt der Leuchtensteuerung bereitgestellt und können somit ebenso einfach durch die Beleuchtungsanordnung abgerufen bzw. empfangen werden.

Die bereitgestellten oder erhaltenen Lichtinformationen werden auf Basis der von der Sensoranordnung erfassten Lichtinformationen, insbesondere der Tageslichtinformationen und bevorzugt der Tageslichtspektralverteilung, sowie auf Basis der weiteren Daten, insbesondere der Himmelsmodelle, bestimmt, was eine besonders vereinfachte Messung bspw. einer Tageslichtspektralverteilung zur Folge hat.

Auf Basis der bereitgestellten oder erhaltenen Lichtinformationen werden Tageslichtsituation und der Himmelszustand, insbesondere die Lichtstärke, Lichtintensität, Farbtemperatur oder Lichtspektralverteilung des Tageslichts oder Kombinationen von diesen, in der Umgebung der Beleuchtungsanordnung oder deren Leuchte antizipiert und in Abhängigkeit der lokalen Leuchteninformationen die Lichtabgabe der Leuchte gesteuert.

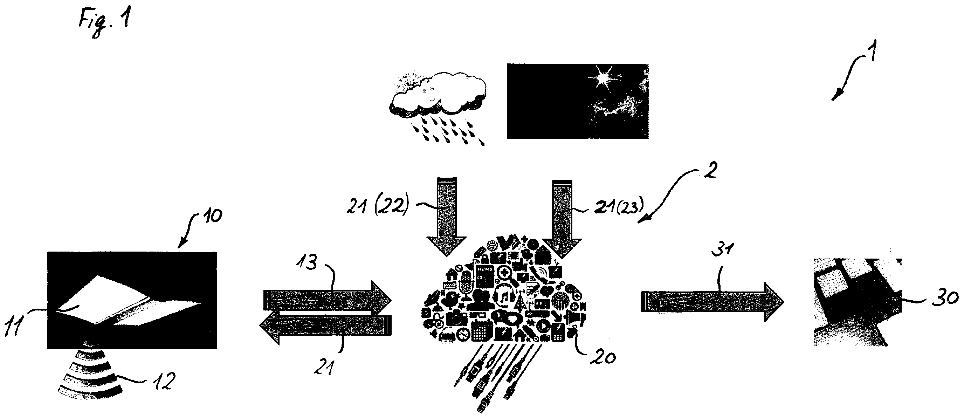

Weitere Information und Vorteile der vorliegenden Erfindung werden anhand der einzigen Figur 1 der begleitenden Zeichnung im Folgenden beschrieben.

Die einzige Figur 1 zeigt deutlich vereinfacht eine schematische Übersicht eines erfindungsgemäßen Beleuchtungssystems 1 mit erfindungsgemäßer Beleuchtungsanordnung 10. Die Beleuchtungsanordnung 10 weist hierzu eine Leuchte 11 auf. Des Weiteren weist die Beleuchtungsanordnung 10 eine Leuchtensteuerung der vorgeschriebenen Art auf. Diese Leuchtensteuerung weist ferner eine Internetanbindung insbesondere zum Erhalt extern bereitgestellter Lichtinformationen 21 auf. Die Leuchtensteuerung ist dabei derart eingerichtet, um auf Basis der so erhaltenen Lichtinformationen 21 in Abhängigkeit lokaler Leuchteninformationen 12 die Lichtabgabe der Leuchte 11 zu steuern. Zur Erfassung der lokalen Leuchteninformationen 12 weist die Beleuchtungsanordnung 10 und insbesondere die Leuchte 11 entsprechende Sensoren auf. Neben der hier dargestellten Leuchte 11 kann die Beleuchtungsanordnung 10 auch weitere Leuchten sowie weitere Leuchtensteuerungen aufweisen.

Neben der Beleuchtungsanordnung 10 weist das hier dargestellte Beleuchtungssystem 1 ferner eine Sensoranordnung 2 mit weiteren Sensoren zur Erfassung von Lichtinformationen in der Umgebung des jeweiligen Sensors auf. Die Sensoranordnung weist des Weiteren eine weitere Internetanbindung auf, um die (externen) Lichtinformation 21 für die Beleuchtungsanordnung 10 bereitzustellen. Die Sensoren der Sensoranordnung 2 umfassen dabei Tageslichtsensoren zur Erfassung von Tageslichtinformationen (Lichtstärke, Lichtintensität, Farbtemperatur oder Lichtspektralverteilung des Tageslichts etc. oder Kombinationen derselben) 23. Dabei kann es sich beispielhaft um Tageslichtmessköpfe oder Sensoren von Leuchten, wie Außenleuchten oder Straßenleuchten, handeln. Darüber hinaus weist die Sensoranordnung 2 eine Cloud 20 auf, welche die erfassten Lichtinformationen der weiteren Sensoren via der weiteren Internetanbindung empfängt und bereitstellt. Weitere Daten 22, 23, wie Wetterdaten (Wettervorhersagedaten 22), Helligkeitsdaten 23, Helligkeitsvorhersagedaten, definierte und bevorzugt standardisierte Himmelsmodelle, sonstige (zeitliche) Informationen (bspw. Jahreszeitinformationen), sowie weitere vergleichbare Daten und jegliche Kombination derselben können bevorzugt von den externen Quellen und insbesondere internetbasiert in der Cloud 20 oder auch direkt in der Leuchtensteuerung bereitgestellt werden und ebenso als Teil der bereitgestellten oder erfassten Lichtinformationen 21 zum Abruf durch die Beleuchtungsanordnung 10 bereitgestellt werden.

Mit der vorbeschriebenem Beleuchtungsanordnung 10 bzw. dem Beleuchtungssystem 1 kann schließlich das zuvor beschrieben Verfahren zur Steuerung von Leuchtenparametern zur definierten Lichtabgabe der Leuchte 11 der Beleuchtungsanordnung 10 entsprechend ausgeführt werden. Insbesondere unter Einbeziehung von bereitgestellten oder erhaltenen Lichtinformationen 21, 22, 23 kann eine aktuelle und/oder zukünftige lokale Lichtinformation bestimmt werden, welche für eine antizipierende Leuchtensteuerung eingesetzt werden kann, um eine insgesamt Licht- und Energie-effiziente Steuerung zu erzielen.

Die Leuchtensteuerung kann dabei lokal in der oder im Bereich der Leuchte 11 vorliegen. Es ist jedoch auch denkbar, dass entsprechende lokale Leuchteninformationen 13 beispielsweise via Internetanbindung an die Cloud 20 übermittelt werden, und dass dort unter Einbeziehung der extern bereitgestellten Lichtinformationen entsprechende Steuerbefehle oder Lichtinformationen 21 an die Leuchte 11 übermittelt werden, um (auf Basis dieser) die Leuchte 11 anzusteuern.

Das Beleuchtungssystem 1 kann ferner Service-basierte Daten 31 zu einem Service-Server 30 übermitteln bzw. können diese vom Service-Server 30 abgefragt werden, um dort entsprechende Beleuchtungsinformationen oder Gebäudefunktionen zu erfassen bzw. festzulegen.

Die vorliegende Erfindung ist durch das vorbeschriebene Ausführungsbeispiel nicht beschränkt, sofern sie vom Gegenstand der folgenden Ansprüche erfasst ist. Insbesondere können alle vorbeschriebenen Merkmale in beliebiger Weise miteinander kombiniert werden.

## Patentansprüche

1. Beleuchtungssystem aufweisend:
• eine Beleuchtungsanordnung (10), aufweisend:
- wenigstens eine Leuchte (11), und
- eine Leuchtensteuerung zur Steuerung von Leuchtenparametern zur definierten Lichtabgabe der wenigstens einen Leuchte (11),
wobei die Leuchtensteuerung ferner eine Internetanbindung zum Erhalt von extern bereitgestellten Lichtinformationen (21) aufweist, wobei die erhaltenen Lichtinformationen (21) mittels verteilt vorgesehener Tageslichtsensoren erfasste Tageslichtinformationen (23) und weitere Daten (22, 23) von externen Quellen umfassen, und
wobei die Leuchtensteuerung derart eingerichtet ist, um auf Basis der erhaltenen Lichtinformationen (21) in Abhängigkeit lokaler Leuchteninformationen (12) die Lichtabgabe der wenigstens einen Leuchte (11) zu steuern,
sowie
• eine Sensoranordnung (2) aufweisend
- die verteilt vorgesehenen Tageslichtsensoren zur Erfassung von den Tageslichtinformationen (23) in der Umgebung des jeweiligen Tageslichtsensors,
wobei die Sensoranordnung (2) eine weitere Internetanbindung aufweist, um die erfassten Tageslichtinformationen (23) für die Beleuchtungsanordnung (10) bereitzustellen,
wobei die Sensoranordnung (2) ferner eine Cloud (20) aufweist, welche die erfassten Tageslichtinformationen (23) der Tageslichtsensoren via der weiteren Internetanbindung empfängt und bereitstellt,
wobei die Beleuchtungsanordnung (10) derart eingerichtet ist, um auf Basis der erhaltenen Lichtinformationen (21) die Tageslichtsituation und den Himmelszustand, insbesondere die Lichtstärke, Lichtintensität, Farbtemperatur oder Lichtspektralverteilung des Tageslichts oder Kombinationen von diesen, in der Umgebung der Beleuchtungsanordnung (10) oder deren wenigstens einer Leuchte (11) zu antizipieren und damit in Abhängigkeit der lokalen Leuchteninformationen (12) die Lichtabgabe der wenigstens einen Leuchte (11) zu steuern.

2. Beleuchtungssystem nach Anspruch 1,
wobei die lokalen Leuchteninformationen (12) wenigstens eine Information aus der Gruppe bestehend aus:
• geographischer Leuchtenposition,
• lokalen Lichtinformationen wie lokaler Lichtstärke, Lichtintensität, Farbtemperatur, (Tages-)Lichtspektralverteilung und Lichtdosis,
• Anwesenheitsinformationen,
• Betriebszustandsinformationen der wenigstens einen Leuchte (11) oder eines Eingabegerätes der wenigstens einen Leuchte (11),
• oder Kombinationen derselben
aufweisen, und/oder
wobei die zu steuernden Leuchtenparameter wenigstens einen Parameter aus der Gruppe bestehend aus Lichtstärke, Lichtintensität, Farbtemperatur und Lichtspektralverteilung aufweisen.

3. Beleuchtungssystem nach einem der vorhergehenden Ansprüche,
wobei die erhaltenen Lichtinformationen (21) des Weiteren aktuelle, zukünftige oder aktuelle und zukünftige lokale Lichtinformationen, wie lokale Wetter- und/oder Helligkeitsvorhersagedaten (22, 23), umfassen, auf Basis derer die Lichtabgabe der wenigstens einen Leuchte (11) in Abhängigkeit der lokalen Leuchteninformationen (12) gesteuert wird.

4. Beleuchtungssystem nach einem der vorhergehenden Ansprüche, wobei die Beleuchtungsanordnung (10), insbesondere die wenigstens eine Leuchte (11), ferner Sensoren zur Erfassung der lokalen Leuchteninformationen (12) in der Umgebung der wenigstens einen Leuchte (11) aufweist, wobei die Sensoren vorzugsweise wenigstens einen Sensor aus der Gruppe bestehend aus Lichtsensoren zur Erfassung von lokalen Lichtinformationen in der Umgebung der wenigstens einen Leuchte (11), Anwesenheitssensoren zur Erfassung von Anwesenheitsinformationen von Personen, und Betriebszustandssensoren zum Erfassen eines Betriebszustandes der wenigstens einen Leuchte (11) aufweisen.

5. Beleuchtungssystem nach einem der vorhergehenden Ansprüche, wobei die Beleuchtungsanordnung (10) eine Vielzahl an Leuchten sowie eine oder mehrere Leuchtensteuerungen aufweist, um auf Basis der erhaltenen Lichtinformationen (21) in Abhängigkeit der lokalen Leuchteninformationen (12) der jeweiligen Leuchte (11) die Lichtabgabe der jeweiligen Leuchte (11) zu steuern,
wobei vorzugsweise die Leuchtensteuerungen von wenigstens zweien der Leuchten zur Steuerung des Beleuchtungssystems miteinander vernetzt sind.

6. Beleuchtungssystem nach einem der vorhergehenden Ansprüche, wobei die erfassten Tageslichtinformationen (23) Lichtstärke, Lichtintensität, Farbtemperatur oder Lichtspektralverteilung des Tageslichts oder Kombinationen derselben aufweisen, wobei die Tageslichtsensoren bevorzugt Tageslichtmessköpfe oder Sensoren von weiteren Leuchten, wie Außenleuchten oder Straßenleuchten, oder eine Kombination derselben umfassen.

7. Beleuchtungssystem nach einem der vorhergehenden Ansprüche, wobei die weiteren Daten (22, 23) aufweisen:
• Wetterdaten, insbesondere Wettervorhersagedaten (22),
• Helligkeitsdaten oder Helligkeitsvorhersagedaten (23),
• definierte und bevorzugt standardisierte Himmelsmodelle,
• sonstige zeitliche Informationen, wie beispielsweise Jahreszeitinformationen,
• oder beliebige Kombinationen derselben,
welche bevorzugt von den externen Quellen, insbesondere internetbasiert, in der Cloud (20) oder der Leuchtensteuerung bereitgestellt werden.

8. Verfahren zur Steuerung von Leuchtenparametern zur definierten Lichtabgabe wenigstens einer Leuchte (11) einer Beleuchtungsanordnung (10) eines Beleuchtungssystems, aufweisend die folgenden Schritte:
• externe Erfassung von Tageslichtinformationen (23) mittels verteilt vorgesehener Tageslichtsensoren einer Sensoranordnung (2) des Beleuchtungssystems in der jeweiligen Umgebung der verteilt vorgesehenen Tageslichtsensoren,
• Bereitstellen der erfassten Tageslichtinformationen (23) mittels einer Internetanbindung der Sensoranordnung (2), wobei die Tageslichtinformationen (23) der Tageslichtsensoren via der Internetanbindung in einer Cloud (20) der Sensoranordnung (2) empfangen und bereitgestellt werden,
• Erhalt von extern bereitgestellten Lichtinformationen (21), wobei die erhaltenen Lichtinformationen (21) die Tageslichtinformationen (23) und weitere Daten (22, 23) von externen Quellen umfassen, durch eine Leuchtensteuerung zur Steuerung von Leuchtenparametern zur definierten Lichtabgabe der wenigstens einen Leuchte (11) mittels einer Internetanbindung der Leuchtensteuerung der Beleuchtungsanordnung,
• Steuern der Lichtabgabe der wenigstens einen Leuchte (11) mittels der Leuchtensteuerung auf Basis der erhaltenen Lichtinformationen (21) in Abhängigkeit lokaler Leuchteninformationen (12),
wobei auf Basis der Lichtinformationen (21) die Tageslichtsituation und der Himmelszustand, insbesondere die Lichtstärke, Lichtintensität, Farbtemperatur oder Lichtspektralverteilung des Tageslichts oder Kombinationen von diesen, in der Umgebung der Beleuchtungsanordnung (10) oder deren wenigstens einer Leuchte (11) antizipiert und damit in Abhängigkeit der lokalen Leuchteninformationen (12) die Lichtabgabe der wenigstens einen Leuchte (11) gesteuert wird.

9. Verfahren nach Anspruch 8, wobei die lokalen Leuchteninformationen (12) wenigstens eine Information aus der Gruppe bestehend aus:
• geographischer Leuchtenposition,
• lokalen Lichtinformationen wie lokaler Lichtstärke, Lichtintensität, Farbtemperatur, (Tages-)Lichtspektralverteilung und Lichtdosis,
• Anwesenheitsinformationen,
• Betriebszustandsinformationen der wenigstens einen Leuchte (11) oder eines Eingabegerätes der wenigstens einen Leuchte (11),
• oder Kombinationen derselben
aufweisen.

10. Verfahren nach Anspruch 8 oder 9, wobei die lokalen Leuchteninformationen (12) wenigstens teilweise mittels Sensoren der Beleuchtungsanordnung (10), insbesondere der wenigstens einen Leuchte (11), in der Umgebung der wenigstens einen Leuchte (11) erfasst werden, wobei die Sensoren vorzugsweise wenigstens einen Sensor aus der Gruppe bestehend aus Lichtsensoren zur Erfassung von Lichtinformationen in der Umgebung der wenigstens einen Leuchte (11), Anwesenheitssensoren zur Erfassung von Anwesenheitsinformationen von Personen, und Betriebszustandssensoren zum Erfassen eines Betriebszustandes der wenigstens einen Leuchte (11) aufweisen, und/oder
wobei die lokalen Leuchteninformationen (12), insbesondere die lokalen Lichtinformationen, einen definierten Zielwert gemessen über der Zeit umfassen, wie beispielsweise eine definierte Lichtdosis pro Zeiteinheit oder einen definierten Energieverbrauchswert pro Zeiteinheit.

11. Verfahren nach einem der Ansprüche 8 bis 10, wobei die erhaltenen Lichtinformationen (21) des Weiteren aktuelle, zukünftige oder aktuelle und zukünftige lokale Lichtinformationen, wie lokale Wetter- und/oder Helligkeitsvorhersagedaten (22), umfassen, auf Basis derer die Lichtabgabe der wenigstens einen Leuchte (11) in Abhängigkeit der lokalen Leuchteninformationen (12) gesteuert wird.

12. Verfahren nach einem der Ansprüche 8 bis 11, wobei die Leuchtensteuerung wenigstens einen Leuchtenparameter der wenigstens einen Leuchte (11) aus der Gruppe bestehend aus Lichtstärke, Lichtintensität, Farbtemperatur und Lichtspektralverteilung steuert.

13. Verfahren nach einem der Ansprüche 8 bis 12, wobei die Beleuchtungsanordnung (10) eine Vielzahl an Leuchten sowie eine oder mehrere Leuchtensteuerungen aufweist, wobei auf Basis der erhaltenen Lichtinformationen (21) in Abhängigkeit der lokalen Leuchteninformationen (12) der jeweiligen Leuchte (11) die Lichtabgabe der jeweiligen Leuchte (11) gesteuert wird,
wobei vorzugsweise die Leuchtensteuerungen von wenigstens zweien der Leuchten zur Steuerung der Beleuchtungsanordnung (10) miteinander vernetzt sind.

14. Verfahren nach einem der Ansprüche 8 bis 13,
wobei die Tageslichtsensoren Lichtstärke, Lichtintensität, Farbtemperatur oder Lichtspektralverteilung des Tageslichts oder Kombination von diesen als extern bereitzustellende Tageslichtinformationen (23) erfassen, wobei die Tageslichtsensoren bevorzugt Tageslichtmessköpfe oder Sensoren von Leuchten, wie Außenleuchten oder Straßenleuchten, oder eine Kombination derselben umfassen.

15. Verfahren nach einem der Ansprüche 8 bis 14, wobei die weiteren Daten (22, 23) aufweisen:
• Wetterdaten, insbesondere Wettervorhersagedaten (22),
• Helligkeitsdaten oder Helligkeitsvorhersagedaten (23),
• definierte und bevorzugt standardisierte Himmelsmodelle,
• sonstige zeitliche Informationen, wie beispielsweise Jahreszeitinformationen,
• oder beliebige Kombinationen derselben,
wobei die weiteren Daten (22, 23) bevorzugt von den externen Quellen, insbesondere internetbasiert, in der Cloud (20) oder der Leuchtensteuerung bereitgestellt werden.

## Claims

1. Lighting system comprising:
• a lighting assembly (10) comprising:
- at least one luminaire (11), and
- a luminaire controller for controlling luminaire parameters for the defined light output of the at least one luminaire (11),
wherein the luminaire controller further has an Internet connection for obtaining externally provided light information (21), wherein the light information (21) obtained comprises daylight information (23) detected by means of distributed daylight sensors and further data (22, 23) from external sources, and
wherein the luminaire controller is configured to control the light output of the at least one luminaire (11) on the basis of the obtained light information (21) as a function of local luminaire information (12),
along with
• a sensor arrangement (2) having
- the distributed daylight sensors provided for detecting the daylight information (23) in the environment of the respective daylight sensor,
wherein the sensor arrangement (2) has a further Internet connection for providing the acquired daylight information (23) for the lighting assembly (10),
wherein the sensor arrangement (2) further comprises a cloud (20) that receives and provides the acquired daylight information (23) of the daylight sensors via the further Internet connection,
wherein the lighting assembly (10) is configured in such a way to anticipate, on the basis of the light information obtained (21), the daylight situation and the sky state, in particular the luminous intensity, light intensity, color temperature or light spectral distribution of the daylight or combinations thereof, in the environment of the lighting assembly (10) or of its at least one luminaire (11) and thus to control the light output of the at least one luminaire (11) as a function of the local luminaire information (12).

2. Lighting system according to claim 1,
wherein the local luminaire information (12) comprises at least one item of information from the group consisting of:
• geographic luminaire position,
• local light information, such as local luminous intensity, light intensity, color temperature, (daylight) spectral distribution and light dose,
• presence information,
• operating state information of the at least one luminaire (11) or of an input device of the at least one luminaire (11),
• or combinations of these
and/or
wherein the luminaire parameters to be controlled have at least one parameter from the group consisting of luminous intensity, light intensity, color temperature and light spectral distribution.

3. Lighting system according to any one of the preceding claims,
wherein the light information (21) obtained further comprises current, future or current and future local light information, such as local weather and/or brightness prediction data (22, 23), on the basis of which the light output of the at least one luminaire (11) is controlled as a function of the local luminaire information (12).

4. Lighting system according to any one of the preceding claims, wherein the lighting assembly (10), in particular the at least one luminaire (11), further comprises sensors for acquiring the local luminaire information (12) in the environment of the at least one luminaire (11), wherein the sensors preferably have at least one sensor from the group consisting of light sensors for acquiring local light information in the environment of the at least one luminaire (11), presence sensors for acquiring presence information of persons, and operating state sensors for detecting an operating state of the at least one luminaire (11).

5. Lighting system according to any one of the preceding claims, wherein the lighting assembly (10) has a plurality of luminaire and one or more luminaire controllers for controlling the light output of the respective luminaire (11) on the basis of the obtained light information (21) as a function of the local luminaire information (12) of the respective luminaire (11),
wherein the luminaire controllers of at least two of the luminaire are preferably networked with each other in order to control the lighting system.

6. Lighting system according to any one of the preceding claims, wherein the acquired daylight information (23) comprises luminous intensity, light intensity, color temperature or light spectral distribution of the daylight or combinations thereof, wherein the daylight sensors preferably comprise daylight measuring heads or sensors of other luminaire, such as outdoor lights or street lights, or a combination thereof.

7. Lighting system according to any one of the preceding claims, wherein the further data (22, 23) comprise:
• weather data, in particular weather forecast data (22),
• brightness data or brightness prediction data (23),
• defined and preferably standardized sky models,
• other time-related information, such as seasonal information,
• or any combinations thereof,
which are preferably provided by the external sources, in particular Internet-based, in the cloud (20) or the luminaire controller.

8. Method for controlling luminaire parameters for the defined light output of at least one luminaire (11) of a lighting assembly (10) of a lighting system, comprising the following steps:
• external acquisition of daylight information (23) by means of distributed daylight sensors of a sensor arrangement (2) of the lighting system in the respective environment of the distributed daylight sensors,
• providing the acquired daylight information (23) by means of an Internet connection of the sensor arrangement (2), wherein the daylight information (23) of the daylight sensors is received and provided via the Internet connection in a cloud (20) of the sensor arrangement (2),
• obtaining externally provided light information (21), wherein the light information (21) obtained comprises the daylight information (23) and further data (22, 23) from external sources, by means of a luminaire controller for controlling luminaire parameters for the defined light output of the at least one luminaire (11) by means of an Internet connection of the luminaire controller of the lighting assembly,
• controlling the light output of the at least one luminaire (11) by means of the luminaire controller on the basis of the obtained light information (21) as a function of local luminaire information (12),
wherein, on the basis of the light information (21), the daylight situation and the sky state, in particular the luminous intensity, light intensity, color temperature or light spectral distribution of the daylight or combinations thereof, in the environment of the lighting assembly (10) or of its at least one luminaire (11) is anticipated and the light output of the at least one luminaire (11) is thus controlled as a function of the local luminaire information (12).

9. Method according to claim 8, wherein the local luminaire information (12) comprises at least one item of information from the group consisting of:
• geographic luminaire position,
• local light information, such as local luminous intensity, light intensity, color temperature, (daylight) spectral distribution and light dose,
• presence information,
• operating state information of the at least one luminaire (11) or of an input device of the at least one luminaire (11),
• or combinations of these

10. Method according to claims 8 or 9, wherein the local luminaire information (12) in the vicinity of the at least one luminaire (11) is acquired at least partially by means of sensors of the lighting assembly (10), in particular of the at least one luminaire (11), wherein the sensors preferably have at least one sensor from the group consisting of light sensors for acquiring light information in the environment of the at least one luminaire (11), presence sensors for detecting presence information of persons, and operating state sensors for detecting an operating state of the at least one luminaire (11), and/or
wherein the local luminaire information (12), in particular the local light information, comprises a defined target value measured over time, such as a defined light dose per time unit or a defined energy consumption value per time unit.

11. Method according to any one of claims 8 to 10, wherein the light information (21) obtained further comprises current, future or current and future local light information, such as local weather and/or brightness prediction data (22), on the basis of which the light output of the at least one luminaire (11) is controlled as a function of the local luminaire information (12).

12. Method according to any one of claims 8 to 11, wherein the luminaire controller controls at least one luminaire parameter of the at least one luminaire (11) from the group consisting of luminous intensity, light intensity, color temperature and light spectral distribution.

13. Method according to any one of claims 8 to 12, wherein the lighting assembly (10) has a plurality of luminaire along with one or more luminaire controllers, wherein the light output of the respective luminaire (11) is controlled on the basis of the obtained light information (21) as a function of the local luminaire information (12) of the respective luminaire (11),
wherein the luminaire controllers of at least two of the luminaire are preferably networked with each other in order to control the lighting assembly (10).

14. Method according to any one of claims 8 to 13,
wherein the daylight sensors detect luminous intensity, light intensity, color temperature or light spectral distribution of the daylight or a combination of these items of daylight information (23) to be provided externally, wherein the daylight sensors preferably comprise daylight measurement heads or sensors of luminaire, such as outdoor lights or street lights, or a combination thereof.

15. Method according to any one of claims 8 to 14, wherein the further data (22, 23) comprise:
• weather data, in particular weather forecast data (22),
• brightness data or brightness prediction data (23),
• defined and preferably standardized sky models,
• other time-related information, such as seasonal information,
• or any combinations thereof,
wherein the further data (22, 23) are preferably provided by the external sources, in particular Internet-based, in the cloud (20) or the luminaire controller.

## Revendications

1. Système d'éclairage présentant :
• un dispositif d'éclairage (10), présentant :
- au moins une lampe (11) et
- une commande de lampe pour la commande de paramètres de lampe pour une émission de lumière définie de l'au moins une lampe (11),
dans lequel la commande de lampe comporte en outre une connexion Internet pour la réception d'informations de lumière (21) fournies à l'extérieur, dans lequel les informations de lumière (21) reçues comprennent des informations de lumière du jour (23) détectées au moyen de capteurs de lumière du jour prévus répartis et d'autres données (22, 23) provenant de sources externes et
dans lequel la commande de lampe est conçue de manière à commander l'émission de lumière de l'au moins une lampe (11) en fonction d'informations de lampe locales (12) sur la base des informations de lumière (21) reçues,
ainsi que
• un dispositif capteur (2) présentant
- les capteurs de lumière du jour prévus répartis pour la détection des informations de lumière du jour (23) dans l'environnement du capteur de lumière du jour respectif,
dans lequel le dispositif capteur (2) comporte une autre connexion Internet, afin de fournir les informations de lumière du jour (23) détectées pour le dispositif d'éclairage (10),
dans lequel le dispositif capteur (2) comporte en outre un nuage (20), qui reçoit et fournit les informations de lumière du jour (23) des capteurs de lumière du jour par l'intermédiaire de l'autre connexion Internet,
dans lequel le dispositif d'éclairage (10) est conçu de manière à anticiper, sur la base des informations de lumière (21) reçues, la situation de lumière du jour et l'état du ciel, en particulier le niveau de luminosité, l'intensité de lumière, la température de couleur ou la répartition spectrale de lumière de la lumière du jour ou des combinaisons de ceux-ci, dans l'environnement du dispositif d'éclairage (10) ou de sa au moins une lampe (11) et ainsi à commander en fonction des informations de lampe (12) locales l'émission de lumière de l'au moins une lampe (11).

2. Système d'éclairage selon la revendication 1,
dans lequel les informations de lampe (12) locales présentent au moins une information du groupe constitué par :
• une position géographique de lampe,
• des informations de lumière locales comme le niveau de luminosité, l'intensité de lumière, la température de couleur, la répartition spectrale de lumière (du jour) et la dose de lumière,
• des informations de présence,
• des informations d'état de fonctionnement de l'au moins une lampe (11) ou d'un appareil de saisie de l'au moins une lampe (11),
• ou des combinaisons de celles-ci
et/ou
dans lequel les paramètres de lampe à commander présentent au moins un paramètre du groupe constitué par le niveau de luminosité, l'intensité de lumière, la température de couleur et la répartition spectrale de lumière.

3. Système d'éclairage selon l'une quelconque des revendications précédentes,
dans lequel les informations de lumière (21) reçues comprennent en outre des informations de lumière locales actuelles, futures ou actuelles et futures, comme des données prévisionnelles de luminosité et/ou météorologiques (22, 23), sur la base desquelles l'émission de lumière de l'au moins une lampe (11) est commandée en fonction des informations de lampe (12) locales.

4. Système d'éclairage selon l'une quelconque des revendications précédentes, dans lequel le dispositif d'éclairage (10), en particulier l'au moins une lampe (11), présente en outre des capteurs pour la détection des informations de lampe (12) locales dans l'environnement de l'au moins une lampe (11), dans lequel les capteurs présentent de préférence au moins un capteur du groupe constitué par des capteurs de lumière pour la détection d'informations de lumière locales dans l'environnement de l'au moins une lampe (11), des capteurs de présence pour la détection d'informations de présence de personnes et des capteurs d'état de fonctionnement pour la détection d'un état de fonctionnement de l'au moins une lampe (11).

5. Système d'éclairage selon l'une quelconque des revendications précédentes, dans lequel le dispositif d'éclairage (10) présente une pluralité de lampes ainsi qu'une ou plusieurs commandes de lampe, afin de commander l'émission de lumière des lampes respectives (11) en fonction des informations de lampe (12) locales des lampes respectives (11) sur la base des informations de lumière (21) reçues,
dans lequel de préférence les commandes de lampe d'au moins deux des lampes sont mises en réseau l'une avec l'autre pour la commande du système d'éclairage.

6. Système d'éclairage selon l'une quelconque des revendications précédentes, dans lequel les informations de lumière du jour (23) reçues présentent le niveau de luminosité, l'intensité de lumière, la température de couleur ou la répartition spectrale de lumière de la lumière du jour ou des combinaisons de ceux-ci, dans lequel les capteurs de lumière du jour comprennent de préférence des sondes de mesure de lumière du jour ou des capteurs d'autres lampes, comme des lampes extérieures ou des réverbères ou une combinaison de ceux-ci.

7. Système d'éclairage selon l'une quelconque des revendications précédentes, dans lequel les autres données (22, 23) présentent :
• des données météorologiques, en particulier des données prévisionnelles météorologiques (22),
• des données de luminosité ou des données prévisionnelles de luminosité (23),
• des modèles du ciel définis et de préférence normalisés,
• d'autres informations temporelles, comme des informations sur la saison,
• ou des combinaisons quelconques de ceux-ci,
qui sont de préférence fournis par les sources externes dans le nuage (20) ou la commande de lampe, en particulier sur la base de l'Internet.

8. Procédé de commande de paramètres de lampe pour une émission de lumière définie d'au moins une lampe (11) d'un dispositif d'éclairage (10) d'un système d'éclairage, présentant les étapes suivantes :
• détection externe d'informations de lumière du jour (23) au moyen de capteurs de lumière du jour prévus répartis d'un dispositif capteur (2) du système d'éclairage dans l'environnement respectif des capteurs de lumière du jour prévus répartis,
• fourniture des informations de lumière du jour (23) détectées au moyen d'une connexion Internet du dispositif capteur (2), dans lequel les informations de lumière du jour (23) des capteurs de lumière du jour sont reçues et fournies par l'intermédiaire de la connexion Internet dans un nuage (20) du dispositif capteur (2),
• réception d'informations de lumière (21) fournies à l'extérieur, dans lequel les informations de lumière (21) reçues comprennent les informations de lumière du jour (23) et d'autres données (22, 23) de sources externes, par une commande de lampe pour la commande de paramètres de lampe pour une émission de lumière définie de l'au moins une lampe (11) au moyen d'une connexion Internet de la commande de lampe du dispositif d'éclairage,
• commande de l'émission de lumière de l'au moins une lampe (11) au moyen de la commande de lampe en fonction d'informations de lampe (12) locales sur la base des informations de lumière (21) reçues,
dans lequel, sur la base des informations de lumière (21), la situation de lumière du jour et l'état du ciel, en particulier le niveau de luminosité, l'intensité de lumière, la température de couleur ou la répartition spectrale de lumière de la lumière du jour ou des combinaisons de ceux-ci, sont anticipés dans l'environnement du dispositif d'éclairage (10) ou de sa au moins une lampe (11) et ainsi l'émission de lumière de l'au moins une lampe (11) est commandée en fonction des informations de lampe (12) locales.

9. Procédé selon la revendication 8, dans lequel les informations de lampe (12) locales présentent au moins une information du groupe constitué par :
• une position géographique de lampe,
• des informations de lumière locales comme le niveau de luminosité, l'intensité de lumière, la température de couleur, la répartition spectrale de lumière (du jour) et la dose de lumière,
• des informations de présence,
• des informations d'état de fonctionnement de l'au moins une lampe (11) ou d'un appareil de saisie de l'au moins une lampe (11),
• ou des combinaisons de celles-ci.

10. Procédé selon la revendication 8 ou 9, dans lequel les informations de lampe (12) locales sont détectées au moins partiellement au moyen de capteurs du dispositif d'éclairage (10), en particulier de l'au moins une lampe (11), dans l'environnement de l'au moins une lampe (11), dans lequel les capteurs présentent de préférence au moins un capteur du groupe constitué par des capteurs de lumière pour la détection d'informations de lumière dans l'environnement de l'au moins une lampe (11), des capteurs de présence pour la détection d'informations de présence de personnes et des capteurs d'état de fonctionnement pour la détection d'un état de fonctionnement de l'au moins une lampe (11) et/ou
dans lequel les informations de lampe (12) locales, en particulier les informations de lumière locales, comprennent une valeur cible définie mesurée au fil du temps, par exemple une dose de lumière définie par unité de temps ou une valeur de consommation d'énergie définie par unité de temps.

11. Procédé selon l'une quelconque des revendications 8 à 10, dans lequel les informations de lumière (21) reçues comprennent en outre des informations de lumière locales actuelles, futures ou actuelles et futures, comme des données prévisionnelles de luminosité et/ou météorologiques (22), sur la base desquelles l'émission de lumière de l'au moins une lampe (11) est commandée en fonction des informations de lampe (12) locales.

12. Procédé selon l'une quelconque des revendications 8 à 11, dans lequel la commande de lampe commande au moins un paramètre de lampe de l'au moins une lampe (11) du groupe constitué par le niveau de luminosité, l'intensité de lumière, la température de couleur et la répartition spectrale de lumière.

13. Procédé selon l'une quelconque des revendications 8 à 12, dans lequel le dispositif d'éclairage (10) présente une pluralité de lampes ainsi qu'une ou plusieurs commandes de lampe, dans lequel l'émission de lumière des lampes respectives (11) est commandée en fonction des informations de lampe (12) locales des lampes respectives (11) sur la base des informations de lumière (21) reçues,
dans lequel de préférence les commandes de lampe d'au moins deux des lampes sont mises en réseau l'une avec l'autre pour la commande du dispositif d'éclairage (10).

14. Procédé selon l'une quelconque des revendications 8 à 13,
dans lequel les capteurs de lumière du jour détectent le niveau de luminosité, l'intensité de lumière, la température de couleur ou la répartition spectrale de lumière de la lumière du jour ou une combinaison de ceux-ci sous forme d'informations de lumière du jour (23) à fournir en extérieur, dans lequel les capteurs de lumière du jour comprennent de préférence des sondes de mesure de lumière du jour ou des capteurs de lampes, comme des lampes extérieures ou des réverbères ou une combinaison de ceux-ci.

15. Procédé selon l'une quelconque des revendications 8 à 14, dans lequel les autres données (22, 23) présentent :
• des données météorologiques, en particulier des données prévisionnelles météorologiques (22),
• des données de luminosité ou des données prévisionnelles de luminosité (23),
• des modèles du ciel définis et de préférence normalisés,
• d'autres informations temporelles, comme des informations sur la saison,
• ou des combinaisons quelconques de ceux-ci,
dans lequel les autres données (22, 23) sont de préférence fournies par les sources externes dans le nuage (20) ou la commande de lampe, en particulier sur la base de l'Internet.
